# EUROPEAN PATENT APPLICATION

(11) **EP 0 541 891 A1**
(43) Date of publication of application: **19.05.1993**
(21) Application number: 92107478.7
(22) Date of filing: 02.05.1992
(51) Int. Cl.: B62K 25/08

(54) **Setting shock absorber with manual drive for bicycles and motor-bicycles**

(71) Applicant: Calzolari, Isella, I-40137 Bologna (IT)
(72) Inventor: Calzolari, Isella, I-40137 Bologna (IT)
(74) Representative: Sassatelli, Franco T., Dr.

(57) **Abstract**

The driver, by means of the lever (1) of the setting device stirruped to the frame which drives on steel cable (2), makes to rotate a bush (3) into the other bush (4) of the tubolar arm (5). To the first bust (3) is tied the first end of a band spring (6) the other end of which is tied to the rigid bush (4). By means of said movement is actuated the screwing or the unscrewing of rod (7) into a bush (9) which realizes the loading or the releasing of a spring (10) stabilized between a beating point (11) and a holed piston (12) to which end (13) is interposed a plastic ring (14) making to adjustable shutter. The spring (10) loading or releasing makes easy the contrast by the tight or not crossing of the oil from the first chamber (15) to the other one (16). By means of the toothed lever (1) of the setting block (26) with chase (27) which supports it to the cycle frame, on the base of a pre-arranged register value scale, is actuated the damping effect setting by the bosh (3) through the valve (28) for the input or not of the air acting the oil compressione.

## Description

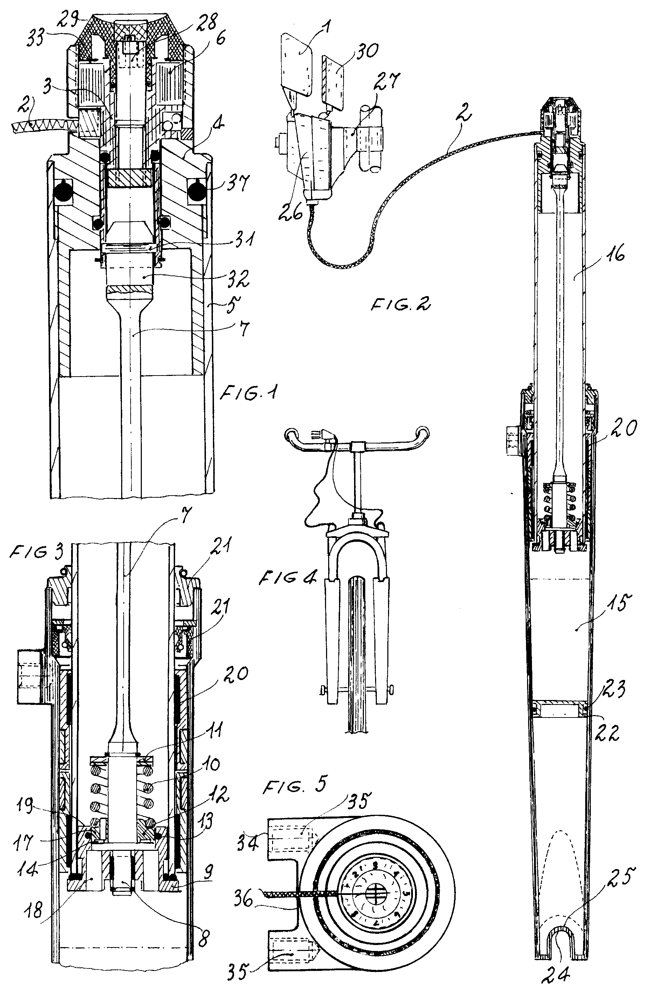

The object of the present invention is to provide a setting shock absorber with manual drive particularly suitable for equipped the front fork of bicycles and motorbicycles. In their normal use said two-wheeled vehicles are made up of rigid forks which, owing to the fact that they are not able to deaden the force of stress determining on the frame because of the road-bed unevenness, are correctly used only on levelled roads. The arising on the market of a new type of sales directed to the realization of bicycles and motorbicycles for sport activity and for free time usable on mixed roads, such as uneven hilly ground, has brought to the use of telescopic re-entry front forks equipped with shock absorbers for impact stress absorption. From the farest prior art using spring mechanical members, to obviate to the kich back effect that these springs cause on the frame, has been using hydraulic shock absorbers which foresee a soft damping. These actual means permit an invariable damping effect or adjustable from the ground by setting of a throttle valve. Consequently in these means is not possible on the way to adjust the damping effect as occasion may require. Furthermore these shock absorbers, which foresee an oil circulation system with a sole pipe and on which come to act different types of valves, are subject to a quick deterioration because the arising of a jam, caused by flow residues, or a possible shortcoming between the different parts are hindrance for their operation. The present apparatus permits the solution os both said problems by means of a new telescopic hydraulic shock absorber in which the effect setting is constantly practicable on the way by the driver. Moreover said shock absorber is made up with an oil circulation system with more crossing holes on the base of a new sistem which comes to rise the apparatus correspondence and guarantees its operation in time. Principally the operation principle of the setting device is based on a spring loading, whatever builds and seats, reached by means of a variator device driven by a lever puts for the loading spring by fit return and on the base of pre-arranged displacements visualized by a variously positioned index. For the use the driver, by means of the lever 1 of the setting device stirruped to the frame which drives on steel cable 2, makes to rotate the bush 3 into the bush 4 of the tubolar arm 5. To the bush 3 is tied the first end of a band spring 6 the other end of which is tied to the rigid bush 4. By means of said motion is actuated the screwing or the unscrewing of a rod 7, with a threaded end 8, into a volute threaded bush 9 which realizes the loading or the releasing of a spring 10 stabilized between a beating point 11 and a holed piston 12 to which end 13 is interposed a plastic ring 14 making to adjustable shutter. The spring loading or releasing makes easy the contrast by the piston 12 for the tight or not crossing of the oil flow from the chamber 15 to the chamber 16. From the chamber 16 to the chamber 15 is acted the air expansion included and compressed into the chamber 16 by the oil flow which then flows again into the chamber 15 passing through the system of five holes 17 of the piston 12 freed by the plastic ring 14. The oil from chamber 15 to the chamber 16 passes through two holes 18 fixed into the bush 9. The oil flows to adjustable flow through the couple of holes 18 and pushes the bored piston 12 which holes 17 are occluded by the plastic ring 14. Said piston 12, contrasted by the spring 10 in beating on the beating point 11, is pushed beyond the end 19 of the bush 9. In particular the chamber 16 cylinder slip into the chamber 15 conical body is obtained by means of two ferrules 20 fixed to the conical body of the chamber 15. Furthermore said conical body of the chamber 15 employs seals 21 to avoid the oil exit and to permit the chamber 16 cylinder cleaning. Into the chamber 15 conical body is inserted a pellet 22 with seal 23 acting as bottom and for determining a such oil quantity. Into the chamber 15 conical body at the lower end connected with the hub connection 24 is foreseen a bore 15 for the air drainage during the fitting up of the pellet 22 with seal 23. By means of the toothed lever 1 of the setting block 26 with chase 27 which supports it to the cycle frame, on the base of a pre-arranged register value scale, is actuated the damping effect setting by means of the bush 3 through the valve 28 for the input or not of the air acting the oil compression. Connected with the bush 3 is foreseen a cap 29 acting as protection of the spring 6 and that, being centrally bored, permits the introduction of a loading means of the air valve 28. The cap 29 also acts as graduation index on which comes to lie the toothed lever 1. To partially or completly zero the loading effected by the lever 1 is acted on lever 30 which is an element of the block 26. In particular the bush 3 drives its motion through pin 31 to the rod 7 with grooved end 32. The bush 3 is blocked by means of a plastic ring 33 fixed to the bush 4 integral with the cylinder of the chamber 16. The protection cap 29 is fitted by joint to the bush 3. Externally the conical body of the chamber 15 foresees two lug bolts 34 with threaded bores 35 for the anchorage into the slits 36 of a fork which joints in integral way its couple of shock absorbers. Into the setting block are foreseen suitable seals 37. A version of the present invention is illustrated in the drawings of sheet 1. Fig. 1 is longitudinal sectional view of part of the shock absorber to point out the variator of the oil pressure. Fig. 2 is longitudinal sectional view of the shock absorber with laterally the connected variator. Fig. 3 is longitudinal sectional view of a part of the shock absorber to point out the damping block. Fig. 4 is frontal schematic view of a cycle to point out its front fork equipped with a couple of invented shock absorbers. Fig. 5 is top view of the same shock absorber.

## Claims

1. Setting shock absorber with manual drive for bicycles and motobicycles foresees a lever (1) of the setting device stirruped to the frame which drives on steel cable (2) a first bush (3) rotating into a second bush (4) of the tubolar arm (5) and with tied to the first bush (3) the first end of a band spring (6) the other end of which is tied to the rigid bush (4), characterized by the fact that the driver by lever (1) rotates the first bush (3) into the second bush (4). By means of said movement is actuated the screwing or the unscrewing of rod (7), with a threaded end (8), into a volute threaded bush (9) which realizes the loading or the releasing of a spring (10) stabilized between a beating point (11) and holed piston (12) to which end (13) is interposed a plastic ring (14) making to adjustable shutter. The spring (10) loading or releasing makes easy the contrast by the piston (12) for the tight or not crossing of the oil flow from the chamber (15) to the other chamber (16). From the second chamber (16) to the first chamber (15) is acted the air expansion included and compressed into the second chamber (16) by the oil flow which then flows again inot the first chamber (15) passing through the system of five holes (17) of the piston (12) freed by the plastic ring (14). The oil from the first chamber (15) to the second chamber (16) passes through two holes (18) fixed into the bush (9). The oil flows to adjustable flow through the couple of holes (18) and pushes the bored piston (12) which holes (17) are occluded by the plastic ring (14). Said piston (12), contrasted by the spring (10) in beating on the beating point (11), is pushed beyond the end (19) of the bush (9). By means of the toothed lever (1) of the setting block (26) with chase (27) which supports it to the cycle frame, on the base of a pre-arranged register value scale, is actuated the damping effect setting by means of the bush (3) through the valve (28) for the input or not of the air acting the oil compression.

2. Setting shock absorber with manual drive for bicycles and motorbicycles, as per claim 1), characterized by the fact that the chamber (16) cylinder slip into the chamber (15) conical body is obtained by means of two ferrules (20) fixed to the conical body of the first chamber (15).

3. Setting shock absorber with manual drive for bicycles and motorbicycles, as per claim 1), characterized by the fact that the conical body of the first chamber (15) employs seals (21) to avoid the oil exit and to permit the second chamber (16) cylinder cleaning.

4. Setting shock absorber with manual drive for bicycles and motorbicycles, as per claim 1), characterized by the fact that into the first chamber (15) conical body is inserted a pellet (22) with seal (23) acting as bottom and for determining a such oil quantity.

5. Setting shock absorber with manual drive for bicycles and motorbicycles, as per claim 1), characterized by the fact that into the first chamber (15) conical body at the lower end connected with the hub connection (24) is foreseen a bore (25) for the air drainage during the fitting up of the pellet (22) with seal (23).

6. Setting shock absorber with manual drive for bicycles and motorbicycles, as per claim 1), characterized by the fact that connected with the first bush (3) is foreseen a cap (29) acting as protection of the spring (6) and that, being centrally bored, permits the introduction of a loading means of the air valve (28).

7. Setting shock absorber with manual drive for bicycles and motorbicycles, as per claim 6), characterized by the fact that said cap (29) also acts as graduation index on which comes to lie the toothed lever (1). To partially or completely zero the loading effect by the lever (1) is acted on lever (30) of the block (26).

8. Setting shock absorber with manual drive for bicycles and motorbicycles, as per claim 1), characterized by the fact that the first bush (3) drives its motion through pin (31) to the rod (7) with grooved end (32).

9. Setting shock absorber with manual drive for bicycles and motorbicycles, as per claim 1), characterized by the fact that the first bush (3) is blocked by a plastic ring (33) fixed to the second bush (4) integral with the cylinder of the chamber (16).

10. Setting shock absorber with manual drive for bicycles and motorbicycles, as per claim 6), characterized by the fact that the protection cap (29) si fitted by joint to the first bush (3).

11. Setting shock absorber with manual drive for bicycles and motorbicycles, as per claim 1), characterized by the fact that externally the conical body of the first chamber (15) foresees two lug bolts (34) with thraded bores (35) for the anchorage into the slits (36) of a fork which joints in integral way its couple of shock absorbers.

12. Setting shock absorber with manual drive for bicycles and motorbicycles, as per claim 1), characterized by the fact that into the setting block (26) are foreseen suitable seals (37).
